# EUROPEAN PATENT APPLICATION

(11) **EP 4 082 634 A1**
(43) Date of publication of application: **02.11.2022**
(21) Application number: 20851408.3
(22) Date of filing: 24.12.2020
(51) Int. Cl.: A63B 17/02, A63B 21/06, A63B 21/062, A63B 21/078, A63B 21/00, A63B 23/12, A63B 71/02, B60P 3/14

(54) **MODULAR MOBILE UNIT FOR PHYSICAL ACTIVITIES**

(30) Priority: 26.12.2019 AR P190103889
(71) Applicant: ALBERIONE, Santiago Roman, 08028 Barcelona (ES); Alberione, Franco Emmanuel, Córdoba (AR)
(72) Inventor: ALBERIONE, Franco Emmanuel, Córdoba (AR)
(74) Representative: Isern Patentes y Marcas S.L.
(86) International application number: PCT/ES2020/070819
(87) International publication number: WO 2021/130400

(57) **Abstract**

A modular unit for physical activities, outdoors, where it contains a multi-purpose structural metal frame mounted on a floor of a trailer on wheels, through a fixing point, where this multi-purpose structural frame comprises two vertical beams linked by longitudinal and transversal longitudinal rails with sliding guides to associate two structurally extendable modules mounted at the front and rear and in turn two horizontal storage cabinets; it is also arranged in a solid way by means of bolts for fixing both to the multi-purpose structural frame and to the floor of the trailer to a set of individual pulley unit module and to another set of double pulley unit module associated with a weight system with protective covers, and also includes a vertical storage cabinet integrally associated with this multipurpose structural frame.

## Description

### FIELD OF THE INVENTION

In the field of sports and physical exercises; materials for physical education, gymnastics, training material; gymnastic apparatus composed of various elements such as cables, scales, beams, slides. Especially sports equipment and accessories for the practice of outdoor sports or gymnastics. The practice of outdoor exercises is well known, nowadays there are already gymnastic apparatuses or training apparatuses mounted on a trailer.

The problem is that in order to practice these exercises, which were previously practiced in an area suitable for the activity with a large surface area, fixed apparatus previously used in the area are taken and mounted on a trailer, with the aim of being able to transport them to the desired location and to be able to practice with the users outdoors, with the limitation that it is only possible to produce unique configurations of devices that are commonly used in these practices, limiting the possibilities of their use to one type of activity per trailer, without being able to obtain diversity in the desired disciplines and increase the number of users performing practices on the same trailer. In order to obtain the possibility of increasing the number of users, a larger trailer is needed, up to a limit defined by the traffic regulations for the circulation of towing vehicles on streets, or to increase the number of trailers to the practice site. According to the experience of using this type of trailer that has an open-air structure with intensive use, the devices deteriorate and generate undesirable effects for users due to the general lack of protection of these devices exposed to the weather, and at the time of exercising the user stains are produced due to dirt or tears in clothing and accidents. The lack of correct storage and fixing of accessories and equipment which represent a risk when transporting the trailer without anchoring the equipment, weights, dumbbells and various accessories which, in the event of a traffic accident, generate a risk for themselves and third parties.

### DESCRIPTION OF THE DRAWINGS

For greater clarity and understanding of the object of the invention, it has been illustrated in several figures, in which it has been represented in one of the preferred forms of realization, all by way of example, where:
Figure 1a) is a general perspective view (right) where you can see the set of modules with the extended structure and the arrangement of equipment and exercise elements deployed in their arrangement for use.
Figure 1b) is a general perspective view (left) where the set of modules with the extended structure can be seen.
Figure 2) is an exploded view of figure 1) highlighting the arrangement of the parts that comprise this one.
Figure 3) is a perspective view of the module highlighting the rectangular structure and the arrangement of its components.
Figure 4) is an exploded view of the individual pulley unit module, highlighting the link between the components and the modular structure, where the protective cover can be seen.
Figure 5) shows a view of the double pulley unit module, highlighting the link between both modular structures, where the protective cover can be seen.
Figure 6) represents a perspective view of the horizontal storage cabinet.
Figure 7) shows a perspective view of the vertical storage cabinet.
Figure 8) represents a perspective view of the module support frame or structure and roof.
Figure 9) shows a perspective view of the structure of the extension module.
Figure 10) is a perspective view of the simple protective cover (9) and double protective cover(19) configuration, highlighting their arrangement as used for step exercise or "steps".

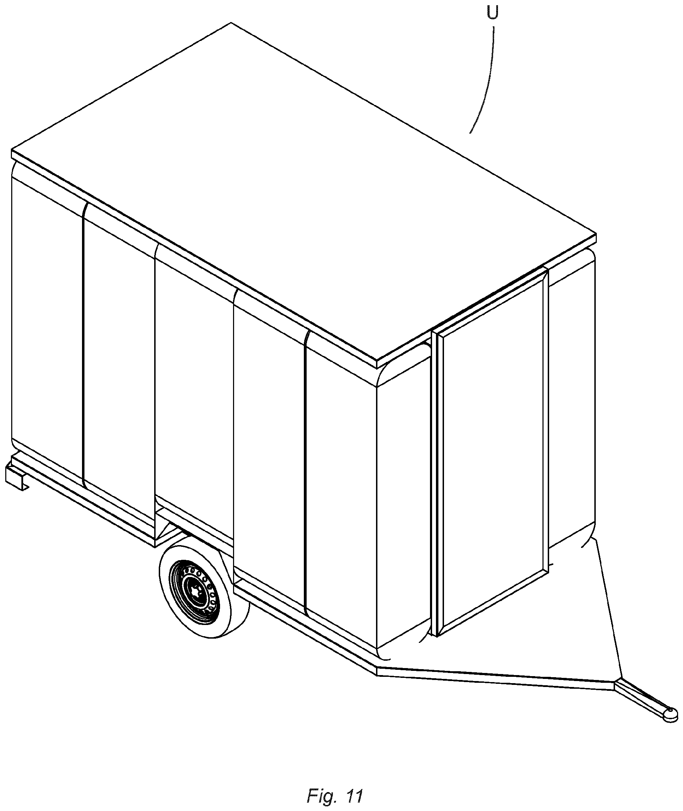

Figure 11) represents a perspective view of the armed group, highlighting its closed layout for transport purposes.

### DETAILED DESCRIPTION OF THE INVENTION

The constituent elements of the modular mobile unit (U) for physical activities are
- 1.: Trailer floor
- 2.: Multi-purpose structural frame
- 3.: Rearextension module
- 4.: Front extension module
- 5.: Horizontal storage cabinet
- 6.: Horizontal storage cabinet
- 7.: Individual pulley unit module
- 8.: Individual pulley unit module
- 9.: Simple protective cover
- 10.: Simple protective cover
- 11.: Individual pulley unit module
- 12.: Individual pulley unit module
- 13.: Simple protective cover
- 14.: Simple protective cover
- 15.: Vertical storage cabinet
- 16.: Simple protective cover
- 17.: Double pulley unit module
- 18.: Double pulley unit module
- 19.: Double protective cover
- 20.: Double protective cover
- 21.: Vertical storage cabinet
- 22.: Simple protective cover
- 23.: Module side structure
- 24.: Module side structure
- 25.: Apex of the lateral structure
- 26.: Drilling and adjustment of elements
- 27.: Drilling for module linking
- 28.: Rectangular structures
- 29.: Barrels
- 30.: Weight system and pulleys
- 31.: Protector
- 32.: Dividers
- 33.: Side structure of storage module
- 34.: Apex
- 35.: Reinforcement
- 36.: Shelves
- 37.: Guide rail
- 38.: Side structure of storage module
- 39.: Apex
- 40.: Reinforcement
- 41.: Shelves
- 42.: Guide rail
- 43.: Beam
- 44.: Guide rail
- 45.: Guide rail
- 46.: Isolating Roof
- 47.: Fixing point
- 48.: Lateral extendable structural module
- 49.: Beam Extendable structural module
- 50.: Structural fixing
- 51.: Vertical segment
- 52.: Multiple perforations
- 53.: Rectangular bottom base with slides
- 54.: Lifting device mounting bracket
- 55.: Plastic plate

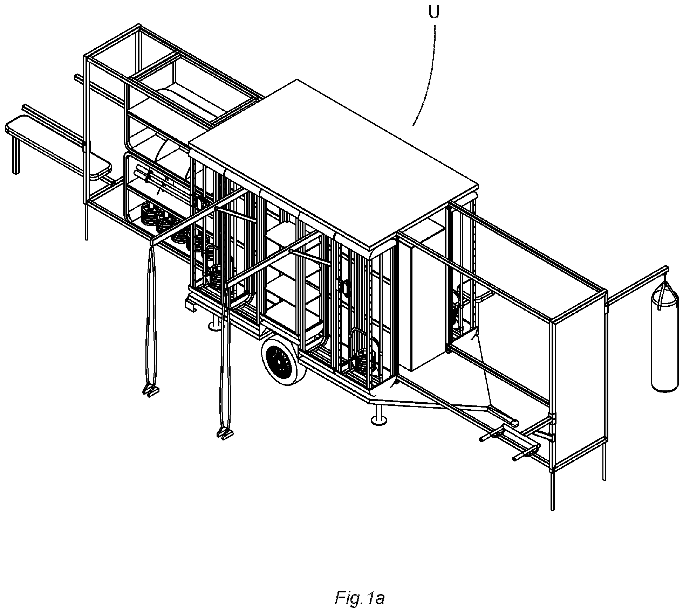

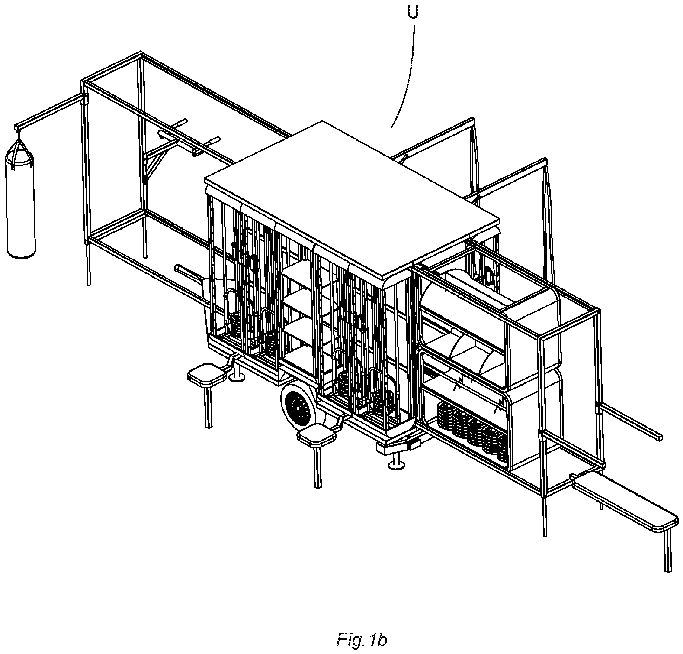

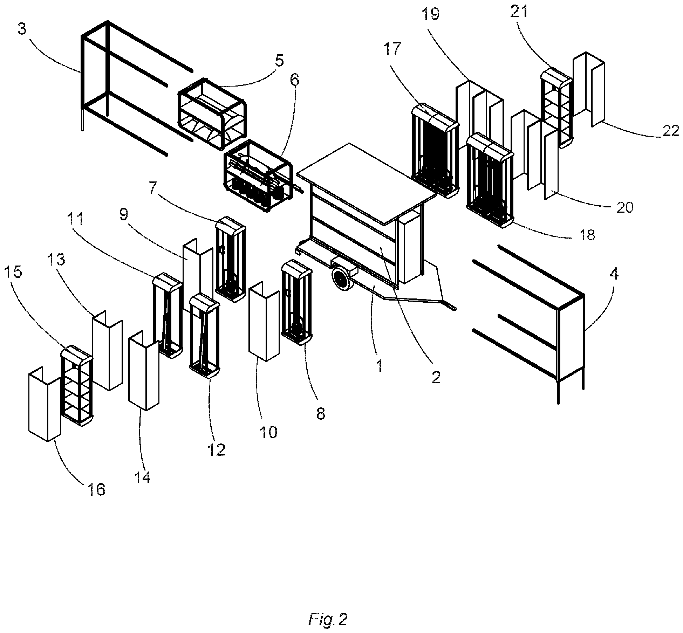

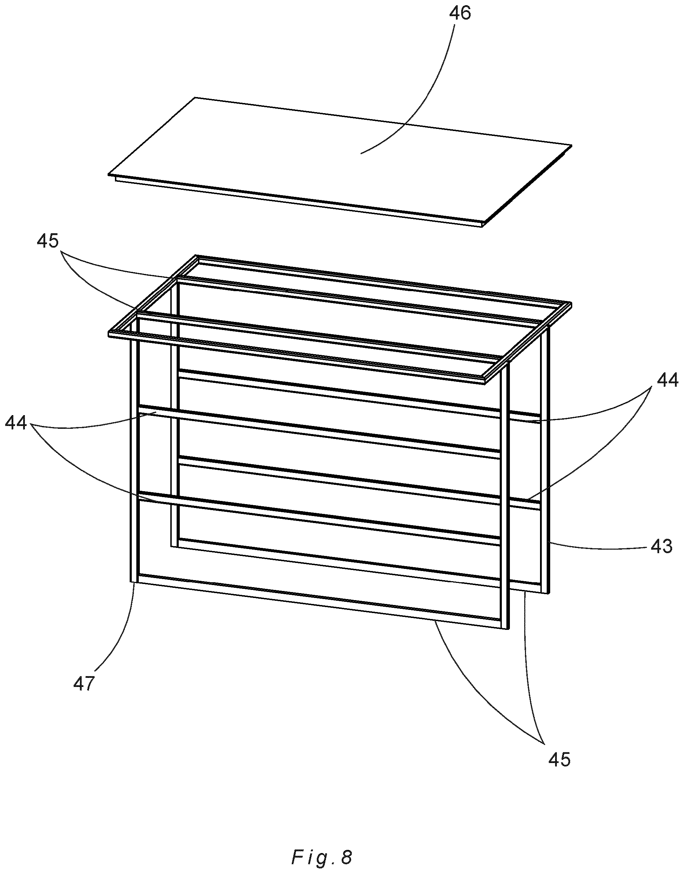

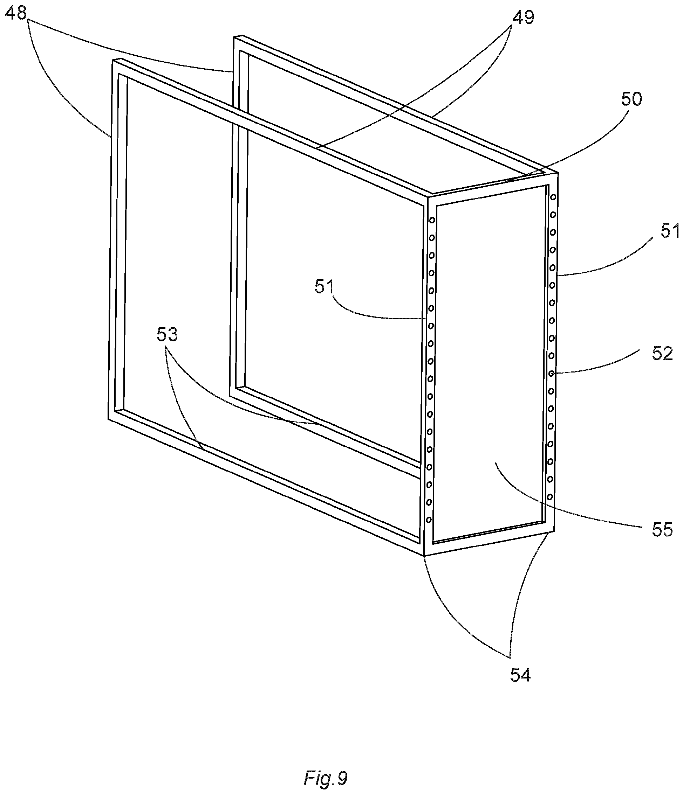

A modular mobile unit (U) for physical activities is proposed for exercise in the open air, comprising a trailer tha includes a multi-purpose structural frame (2) comprising beams (longitudinal beams) and crossbeams (transversal beams), in turn the structural frame (Fig. 8) is associated with two modules of structures (Fig. 9) which are extendable and mounted on the front (4) and rear (3) (Fig. 2) that allow the number and variety of exercise equipment to be increased in both the front and rear sectors, (Fig. 1a) tripling the total length of the trailer, increasing the number of users.

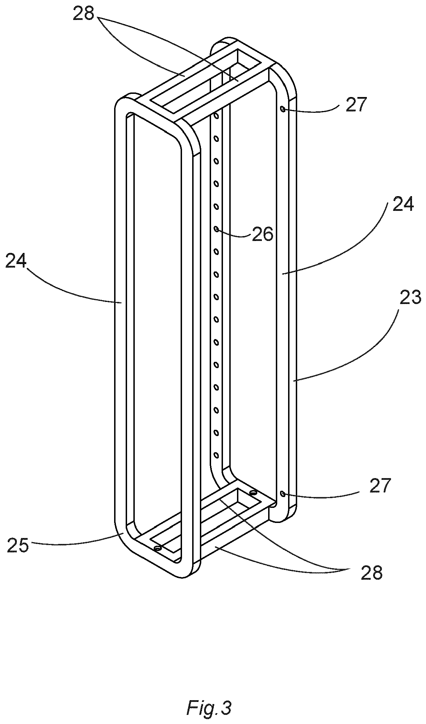

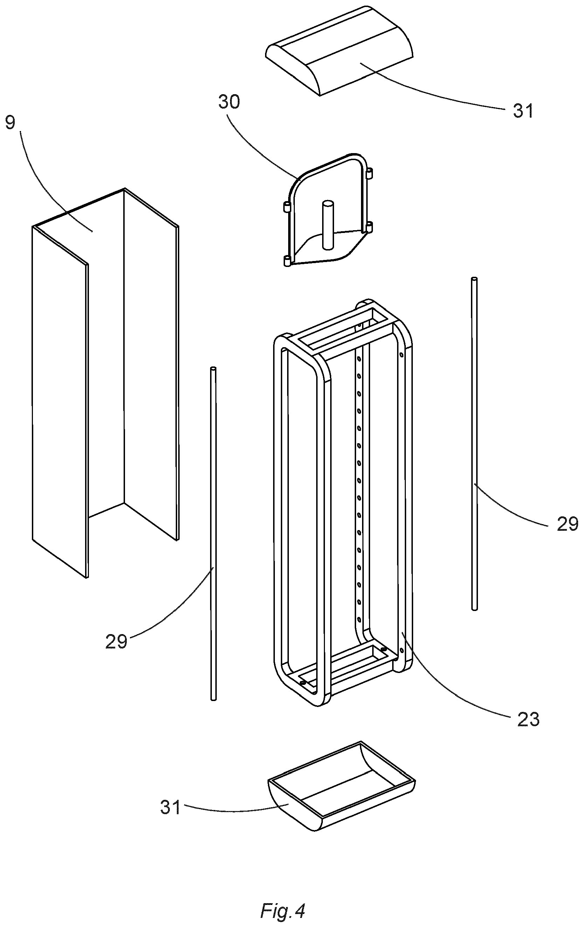

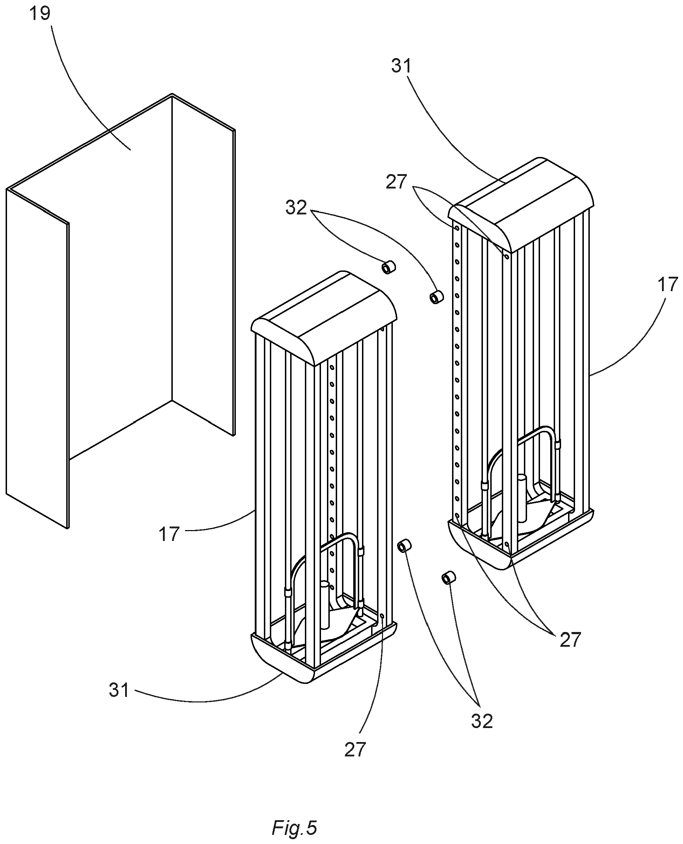

In turn, the multi-purpose structural frame (2) is associated with single and double structural modules (Fig. 3, Fig. 4) that allows for the generation of multiple configurations to adapt gymnastic apparatus mounted on the trailer, being used in a simple manner or coupled to another one that is the same in symmetry, (Fig. 5) obtaining apparatus with individual pulleys, double pulleys, fixed bicycles, among others, associated to safety cabinets and storage for the different elements and apparatus used in the activity, being the same scalable, which allows for an increase in the number of users. It has locking/closing panels and storage cabinets associated with the structure to protect the described apparatus and modules that make up the set from bad weather and in the event of an accident, ensuring the conditions for their transport, where the external covers when removed are used as "steps" apparatus for physical exercise.

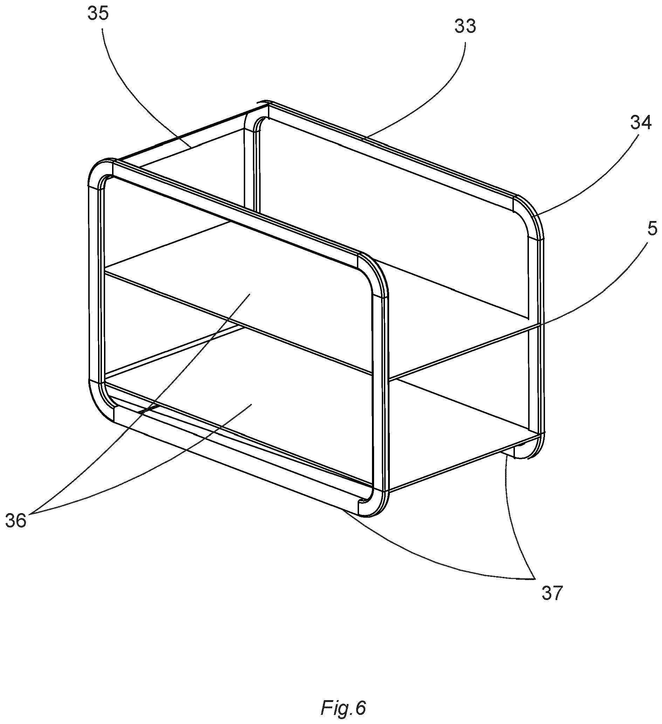

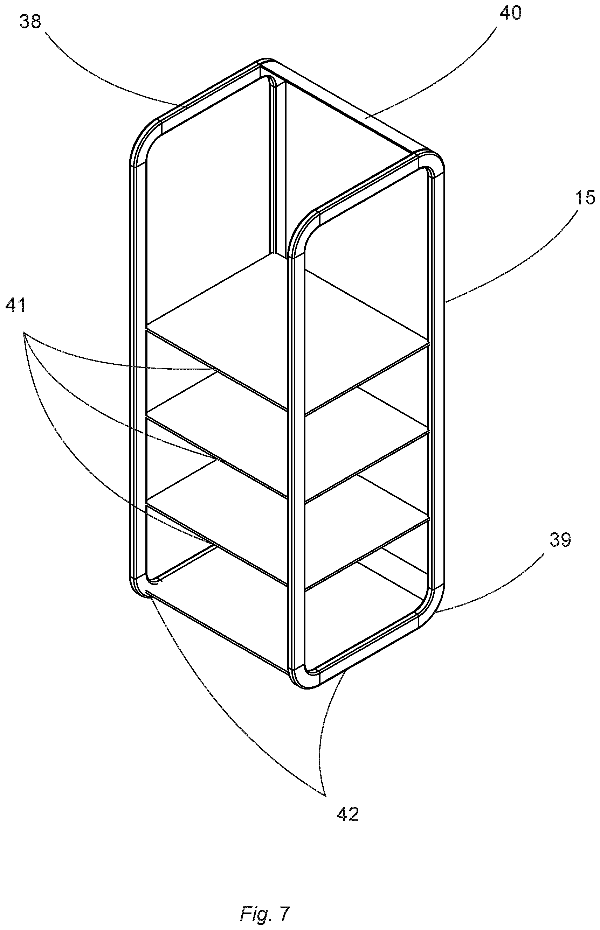

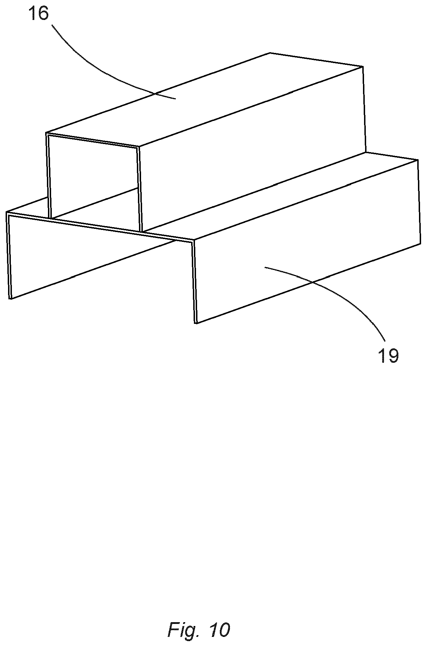

Individual pulley unit module (7, 8) (Fig. 3), and double pulley unit modules (17,18) (Fig. 5), associated with horizontal storage cabinets (Fig. 6) and vertical storage cabinets (Fig. 7), which include single protective covers (9), double protective covers (19), module support structure and isolating roof (46), in turn the single protective covers (9) and double protective covers (19) are used as steps (Fig. 10).

The individual pulley unit module (7, 8) (Fig. 3), is made up of two equal and parallel module side structures (24) made of a structural pipe with a rectangular shape and radii at its apexes (25), which are welded to a rectangular structure (28) made of structural pipe arranged centrally; where one of the lateral/module side structures (24) has drilling and adjusment of elements (26) separated from each other in an equidistant way and arranged on the external face, used for the regulation of the elements of gymnastics and perforations for drilling for module linking (27) arranged on the same side in each of its radii that allow it to be linked by means of spacers and bolts to another equal module arranged in symmetry (Fig. 5).

The individual pulley unit module (7, 8, 11, 12) (Fig. 3 and Fig. 4), consists of a structural module where two barrels (29) are welded vertically and centred on each of the side structures, through which the weight system (30) and pulleys will slide vertically; and pulleys by means of self-lubricating bushings that ensure movement without generating deviations or oscillations in the trajectory; To protect this system, it has two plastic dome shaped protectors (31), of screwed to the base and the other to the upper end, and a single vertical plastic "U" shaped simple protective cover (9) mounted and fixed by means of locks to the module structure, to safely protect all the mounted components, both from the weather and during transport.

The set of individual pulleys unit module (7, 8, 11, 12) is fixed to both the multi purposse structuralframe (2) and the trailer floor (1) by means of bolts. By means of this apparatus, exercises can be carried out to work the minor muscles such as biceps, triceps, pectorals individually or jointly, shoulders, buttocks, adjusting the exercise technique in the most correct way and optimising the results.

The module described can be configured as a double pulley /unit module (17, 18) shown in Fig. 5, using two single pulley modules (Fig. 4 and Fig. 5), connected by pins which are centred by spacers/deviders (32) with the holes for drilling for module linking (27) arranged on each side of the modules (Fig. 5), and to protect this module it has a double protective cover (19) in the form of ¨U¨ made of plastic, mounted and fixed by means of locks to two protectors made of plastic (31), which are in turn screwed to the base and upper end of each structure (Fig. 5), which together cover the entire device, to safely protect all the mounted components, both from the weather and during transport.

The entire double pulley unit is fixed to the structural frame structure (Fig. 8) and to the floor of the trailer (1) by means of bolts. By means of this apparatus, it is possible to perform strength exercises in a safe manner such as dominoes, parallel exercises or hanging accessories and to perform hanging exercises using the body's own strength, where large muscles such as the back, pectorals and legs are trained.

The configuration makes it possible to work with both weight systems and pulleys (30) at the same time, making it possible to determine the amount of total strength of the user. The configuration of the multi-purpose structural module (Fig. 3) is that of storage cabinets, both horizontally and vertically (5) and (6) In the case of the horizontal cabinet module represented in (Fig. (6), which comprises two equal and parallel side structures made of structural pipe (33) in a rectangular shape, arranged horizontally with radii at their apexes (34), welded on their internal faces to reinforcements (35) with shelves made of sheet metal (36), bolted to these reinforcements, which have organizers with fastening devices to maintain order and to protect the exercise elements such as Olympic bars, weights of various weight graduations, fatigue stops, etc. In the lower part of the cabinet, there are guide rail/slides (37) that allow it to be mounted and to slide on the guide of the central structure (Fig. 2.) and the floor of the trailer. Their purpose is to keep order and protect the exercise elements such as Olympic bars, weights of different weight graduations, fatigue stops, etc.

The structure or frame 2 is associated with a vertical storage cabinet (15, 21) represented in the (Fig.7) which comprises two equal and parallel side structures made of structural pipe (38) in a rectangular shape, arranged vertically with radii at their apexes (39), welded on their internal faces to reinforcements (40) with shelves made of sheet metal (41), bolted to these reinforcements, which have organizers with fastening devices to maintain order and to protect the exercise elements such as minor weights of various graduations in kilos, accessories such as pull ropes, stirrups, short bars, etc. At the bottom of the vertical cabinet are the guide rail/slides (42) that allow it to be mounted and slid over the central structure and the floor of the trailer. They are used to keep order and protect the exercise elements such as small weights with different weight graduations, accessories such as pull ropes, stirrups, short bars, etc.

In order to be able to extend the user capacity utility the configuration of the structure or frame (Fig.8) is associated with two extendable modules (Fig. 2) arranged at the front (4) and at the rear of the trailer (3), where each one comprises two equal and parallel rectangular structures arranged in a horizontal direction made of structural pipe represented in the (Fig. 9), which at one end are welded to a vertically arranged rectangular structure made of structural fixing pipe (50) which in its vertical segments (51) have multiple equidistant perforations (52) to adjust the height of the exercise elements; the extendable module on the back serves as a bench press, squat cage or pre-military press where the Olympic bar is loaded with a lot of weight and the user can perform the strength exercises safely thanks to the holes on the side faces (51) that serve to adjust the height position and to fix the fatigue stops, and the extendable module at the front of the trailer, exercise elements can be mounted, such as open or closed gripper mittens to perform dominoes exercises, the paralleling device to perform triceps exercises, and where the punching bag is also hung to perform coordination exercises. At the lower ends of the rectangular bottom base with rail/slides (53) there are supports for fixing electrical and/or mechanical lifting devices, (54) to facilitate the support, stability and levelling of the trailer regardless of any irregularities in the terrain where it is deployed. It also has a plastic plate (55) that serves as an information support, an annotation board.

To secure and protect all the components, it has a roof and module support structure (Fig. 2 and Fig. 8) which is made up of a structure (Fig. 8) made of structural pipe, where parallel and horizontal guide slides (44) are projected and arranged centrally on each side of the structure, which make it possible to assemble the horizontal (Fig. 6) and vertical (Fig. 7) storage cabinets.

At the top and bottom of this structure (Fig.8), parallel horizontal guides rails (45) are designed to enable the assembly and operation of the extension modules (Fig. 9).

The upper part of the support structure (Fig. 8) has a rectangular roof made of sheet metal covered with thermal insulation (46) to protect the components and modules; the lower part has fixing points (47) for welding to the trailer structure.

The covers (9, 10, 19, 20) of the single and double pulley apparatus modules (Fig. 10), when removed from their support, are used in their function as stackable steps, where the double cover (19) is placed horizontally and with its face open on the floor, and above it, by means of centring devices and locators, the single cover (9) is fitted horizontally, where aerobic training exercises will be carried out to strengthen the buttocks, hips and legs. By means of this modular structure, various modules can be configured to perform different functions for the development of outdoor exercises, in order to carry them out safely and guarantee the correct execution of the exercises.

## Claims

1. A modular unit for physical activities, outdoors, where it contains a multi-purpose structural metal frame (2) mounted on a floor (1) of a trailer on wheels, through a fixing point (47), CHARACTERISED because this multi-purpose structural frame (2) comprises two vertical beams (43) linked by longitudinal and transversal longitudinal rails with sliding guides (44,45) to associate two structurally extendable modules mounted at the front and rear (3,4) and in turn two horizontal storage cabinets (5,6); it is also arranged in a solid way by means of bolts for fixing both to the multi-purpose structural frame (8) and to the floor of the trailer (1) to a set of individual pulley unit module (7,8,11 and 12) and to another set of double pulley unit module (17, 18)associated with a weight system (30) with protective covers (9,10,13,14,16,19,20,31), and also includes a vertical storage cabinet (15,21) integrally associated with this multipurpose structural frame (2).

2. A modular unit, according to claim .1, CHARACTERISED BECAUSE the module of individual pulleys (7, 8, 11, 12) comprises two equal and parallel side structures of rectangular shape (24) with radii at their apexes (25), joined together by two rectangular structures (28) arranged centrally at the top and at their base, where the side structures contain perforations for drilling and adjustment of elements (27) to link a module with another module in symmetry.

3. A modular unit, according to claim 1, CHARACTERISED BECAUSE the vertical storage cabinet (15, 21) comprises two equal and parallel side structures with structural spouts (38) in a rectangular shape, vertically arranged with radii at their apexes (39), welded on their inner sides to reinforcements (40) with shelves made of sheet metal (41), and the lower part of this vertical cabinet has sliding guides rails (42) as a means of mounting and sliding on the multi-purpose multi-purpose structural frame (2) and the trailer floor (1).

4. A modular unit, according to claim 1, CHARACTERIZED BECAUSE the protective covers have a morphology in the form of ¨U¨ and plastic material
